# EUROPÄISCHE PATENTSCHRIFT

(11) **EP 1 992 914 B1**
(45) Veröffentlichungstag und Bekanntmachung des Hinweises auf die Patenterteilung: **09.05.2012**
(21) Anmeldenummer: 08009021.0
(22) Anmeldetag: 15.05.2008
(51) Int. Cl.: G01D 5/245, G01D 5/249

(54) **Inkrementalweggeber und Verfahren zum Bestimmen einer Verschiebung eines ersten Objekts relativ zu einem zweiten Objekt**
Incremental displacement sensor and method for determining the displacement of an object relative to another object
Dispositif de déplacement incrémentiel et procédé de détermination d'un déplacement d'un premier objet par rapport à un second objet

(30) Priorität: 16.05.2007 DE 102007022942
(43) Veröffentlichungstag der Anmeldung: 19.11.2008
(73) Patentinhaber: Pepperl + Fuchs GmbH, 68307 Mannheim (DE)
(72) Erfinder: Galm, Timo, 68239 Mannheim (DE); Speckmann, Christian, 64625 Bensheim (DE)
(74) Vertreter: Schiffer, Axel Martin

(56) Entgegenhaltungen:
- DE-A1- 4 318 386
- DE-A1- 19 637 855
- DE-A1- 19 963 809
- DE-C1- 19 717 364

## Beschreibung

Die vorliegende Erfindung betrifft in einem ersten Aspekt einen Inkrementalweggeber nach dem Begriff des Anspruchs 1.

In einem weiteren Aspekt bezieht sich die Erfindung auf ein Verfahren zum Bestimmen einer Verschiebung eines ersten Objekts relativ zu einem zweiten Objekt.

Ein gattungsgemäßer Inkrementalweggeber wird zum Bestimmen einer Verschiebung eines ersten Objekts relativ zu einem zweiten Objekt verwendet und ist beispielsweise aus DE 197 01 319 A1 bekannt. Ein solcher Inkrementalweggeber weist eine mit dem ersten Objekt verbundene oder zu verbindende Abtasteinheit zum Abtasten einer mit dem zweiten Objekt verbundenen oder zu verbindenden Teilungsspur mit ersten Bereichen und zweiten Bereichen auf, die mit einer Periodenlänge abwechselnd angeordnet sind. Hierbei weisen die ersten Bereiche eine erste physikalische Eigenschaft und die zweiten Bereiche eine davon unterschiedliche zweite physikalische Eigenschaft auf. Außerdem weist die Abtasteinheit eine Mehrzahl von Sensoren zum Abtasten der ersten Bereiche und zweiten Bereiche aufgrund der ersten und/oder der zweiten physikalischen Eigenschaft auf. Schließlich ist eine mit der Abtasteinheit verbundene Auswerteeinheit vorhanden zum Bestimmen der Verschiebung auf Grundlage von Messsignalen der Sensoren.

Bei einem gattungsgemäßen Verfahren, welches ebenfalls aus DE 197 01 319 A1 bekannt ist, wird eine mit dem ersten Objekt verbundene Teilungsspur mit einer Mehrzahl von Sensoren, die mit dem zweiten Objekt verbunden sind, abgetastet. Die Teilungsspur weist dabei erste Bereiche mit einer ersten physikalischen Eigenschaft und zweite Bereiche mit einer zweiten physikalischen Eigenschaft auf, die mit einer Periodenlänge abwechselnd angeordnet sind und aus Messsignalen der Sensoren, die aufgrund der ersten und/oder der zweiten physikalischen Eigenschaft gewonnen werden, wird die Verschiebung des ersten Objekts relativ zu dem zweiten Objekt bestimmt.

Induktive Inkrementalweggeber sind außerdem in DE 31 00 486 A1, EP 1 071 927 B1, US-4,893,078 und US-5,003,260 beschrieben.

US-6,885,310 B2 und US-6,552,666 B1 offenbaren Vorrichtungen und Verfahren zur Detektion einer Phasendifferenz für einen Positionsdetektor.

EP 0 795 738 B1 und EP 0 446 969 B1 behandeln induktive lineare Positionsnachweisvorrichtungen.

EP 0 473 808 A1 hat eine Messeinrichtung zur Ermittlung eines Weges oder einer Position zum Gegenstand.

Inkrementalweggeber werden zur Messung von Lageänderungen verwendet. Dabei bestimmen zwei zueinander versetzte Sensoren jeweils die Position einer Teilungsspur. Durch Zählen der Einzelimpulse kann die Bewegung der Teilungsspur relativ zu den Sensoren bestimmt werden. Da die von den beiden Sensoren erzeugten Signale einen Phasenversatz von beispielsweise 90° haben, ist außerdem eine Richtungserkennung möglich.

Wenn bei dem Inkrementalweggeber induktive Sensoren eingesetzt werden, ergeben sich Schwierigkeiten aufgrund der Abhängigkeit des Schaltpunkts der Sensoren bei seitlicher Annäherung eines metallischen Objekts, beispielsweise eines leitenden Bereichs der Teilungsspur, von der Entfernung des Sensors zur Teilungsspur. Der leitende Bereich der Teilungsspur wird umso früher erkannt, je näher er sich vor dem Sensor befindet.

Das für die Richtungserkennung gewünschte 1:1-Puls-Pausen-Verhältnis lässt sich so nur für einen ganz bestimmten Abstand erzielen.

Weiterhin sind im Stand der Technik jeweils Teilungsspuren erforderlich, bei denen die ersten und die zweiten Bereiche jeweils dieselbe Ausdehnung haben. In der Praxis müssen deshalb Teilungsspuren in den meisten Fällen separat an den zu überwachenden Objekten angebracht werden, selbst wenn bereits sich wiederholende Strukturen, die grundsätzlich zum Erkennen einer Verschiebung geeignet wären, bereits vorhanden sind.

**Aufgabe** der Erfindung ist es, einen Inkrementalweggeber und ein Verfahren zum Bestimmen der Verschiebung eines ersten Objekts relativ zu einem zweiten Objekt zu schaffen, bei denen weitgehend unabhängig vom konkreten Abstand der eingesetzten Sensoren zu einer Teilungsspur zuverlässige Messresultate geliefert werden.

Diese Aufgabe wird in einem ersten Aspekt der Erfindung durch den Inkrementalweggeber des Anspruchs 1 gelöst.

In einem weiteren Gesichtspunkt der Erfindung wird die Aufgabe durch das Verfahren mit den Merkmalen des Anspruchs 10 gelöst.

Vorteilhafte Weiterbildungen des erfindungsgemäßen Inkrementalweggebers sind Gegenstand der abhängigen Ansprüche.

Der Inkrementalweggeber der oben genannten Art ist erfindungsgemäß dadurch weitergebildet, dass die Abtasteinheit mindestens drei Sensoren aufweist, die insbesondere entlang der Teilungsspur, über mindestens eine Periodenlänge verteilt voneinander beabstandet angeordnet sind, dass in der Auswerteeinheit zum Bestimmen der Verschiebung ein erstes Schaltsignal und ein zweites Schaltsignal aus den Messsignalen der Sensoren erzeugt wird, dass das erste Schaltsignal einen ersten Wert, insbesondere HIGH, annimmt, wenn derjenige Sensor, welcher ein maximales Messsignal ausgibt, zu einer ersten Untergruppe von Sensoren gehört, und ansonsten einen zweiten Wert, insbesondere LOW, annimmt, dass zweite Schaltsignal einen ersten Wert, insbesondere HIGH annimmt, wenn derjenige Sensor, welcher ein maximales Messsignal ausgibt, zu einer zweiten Untergruppe von Sensoren gehört, und ansonsten einen zweiten Wert, insbesondere LOW, annimmt, und wobei mindestens ein Sensor sowohl zur ersten Untergruppe als auch zur zweiten Untergruppe gehört.

Das Verfahren der oben genannten Art ist erfindungsgemäß dadurch weitergebildet, dass mindestens drei Sensoren entlang der Teilungsspur über mindestens eine Periodenlänge verteilt voneinander beabstandet angeordnet werden, dass die Verschiebung auf Grundlage eines ersten Schaltsignals und eines zweiten Schaltsignals bestimmt wird, dass das erste Schaltsignal einen ersten Wert, insbesondere HIGH, annimmt, wenn derjenige Sensor, welcher ein maximales Messsignal ausgibt, zu einer ersten Untergruppe von Sensoren gehört, und ansonsten einen zweiten Wert, insbesondere LOW, annimmt, dass zweite Schaltsignal einen ersten Wert, insbesondere HIGH, annimmt, wenn derjenige Sensor, welcher ein maximales Messsignal ausgibt, zu einer zweiten Untergruppe von Sensoren gehört, und ansonsten einen zweiten Wert, insbesondere LOW, annimmt, und wobei mindestens ein Sensor sowohl zur ersten Untergruppe als auch zur zweiten Untergruppe gehört.

Als ein Kerngedanke der Erfindung kann angesehen werden, die Abstandsabhängigkeit der Sensorsignale auszuschalten durch eine logische Auswertung, bei der es nicht mehr auf die absolute Höhe der Messsignale, sondern nur noch auf die relative Höhe des jeweiligen Sensorsignals im Vergleich zu denjenigen der anderen Sensoren ankommt.

Als zweiter Kerngedanke beinhaltet die Erfindung, damit zusammenhängend, mindestens drei Sensoren über eine Periode der Teilungsspur anzuordnen und eine Unterteilung dieser Sensoren in Untergruppen vorzunehmen, wobei mindestens ein Sensor Teil beider Untergruppen ist.

Ein erster wesentlicher Vorteil der erfindungsgemäßen Lösung besteht in der Abstandsunabhängigkeit der Auswertung. Dies ermöglicht besonders vielfältige Einsatzmöglichkeiten im industriellen Bereich, da eine präzise Einrichtung der Messvorrichtung gegenüber der Teilungsspur nicht erforderlich ist.

Ein zweiter wesentlicher Vorteil kann darin gesehen werden, dass die Teilungsspur, im grundlegenden Unterschied zu bekannten Lösungen, nicht eine 1:1-Teilung aufweisen muss. Im Grundsatz kann jede beliebige periodische Struktur zur Generierung des Inkrementalsignals genutzt werden.

Als maximales Messsignal soll hier dasjenige Messsignal verstanden werden, das bei maximaler Annäherung des entsprechenden ersten oder zweiten Bereichs an den fraglichen Sensor von eben diesem Sensor geliefert wird. Bezogen auf 0 kann dies betragsmäßig gegebenenfalls auch ein Minimalwert sein. Letzteres ist beispielsweise der Fall, wenn mit einem induktiven Sensor die Bewegung eines Metallblechs bestimmt wird, in welchem sich in periodischen aber vergleichsweise großen Abständen Löcher befinden. Wenn ein Sensor direkt vor dem Loch positioniert ist, sinkt die Bedämpfung ab auf einen Minimalwert, der jedoch, bezogen auf die Vollbedämpfung ein Maximalwert, nämlich ein Wert maximaler Abweichung, ist.

Wesentlich für die Erfindung ist außerdem, dass die Signale von zwei benachbarten Sensoren sich innerhalb des gewünschten Erfassungsbereichs der Schiene überschneiden. Das bedeutet, dass der laterale Abstand von zwei benachbarten Sensoren im Verhältnis zur lateralen Ausdehnung des kleineren der beiden Bereiche der Teilungsspur so gewählt ist, dass jedenfalls vorübergehend beide Sensoren ein Nachweissignal aufgrund dieses Bereichs liefern.

Hieraus folgt, dass die Stegbreite einer Fahne einer Teilungsspur eine gewisse Mindestbreite haben muss, so dass zumindest vorübergehend zwei benachbarte Sensoren ein Signal aufgrund dieser Fahne liefern. Die genannte Bedingung kann also einerseits durch eine gewisse Mindestbreite des ersten und/oder des zweiten Bereichs und andererseits durch einen gewissen lateralen Höchstabstand der Sensoren erfüllt werden.

Solange die obige Bedingung im Hinblick auf den Abstand der Sensoren erfüllt ist, können die Sensoren grundsätzlich beliebig über eine Periode der Teilungsspur oder auch über mehrere Perioden verteilt angeordnet sein. Prinzipiell sind hier auch variable Abstände der Sensoren voneinander möglich, wobei in bevorzugten Ausführungsvarianten die Sensoren jedoch gleichmäßig voneinander beabstandet angeordnet sind, da sich hierbei die Auswertung einfacher gestaltet.

Grundsätzlich könnte bereits mit zwei Sensoren pro Periode, wenn außerdem die Teilungsspur ein Verhältnis der ersten Bereiche zu den zweiten Bereichen von 1:1 aufweist, ein abstandsunabhängiges Signal generiert werden. Allerdings kann hierbei nur ein einziges Inkrementalsignal erzeugt werden und eine Bestimmung der Richtung der Verschiebung des ersten Objekts relativ zum zweiten Objekt ist nicht möglich.

Die Targetbreite, also beispielsweise die Breite oder laterale Ausdehnung des ersten Bereichs, kann auch größer werden als eine Lückenbreite, also eine laterale Ausdehnung des zweiten Bereichs. Dann muss gegebenenfalls statt des maximalen Signals, wie vorstehend erläutert, das Minimum des Signals als Kriterium herangezogen werden.

Die Schaltsignale können auch invertiert ausgegeben werden, das heißt, dass statt des Werts HIGH der Wert LOW ausgegeben wird und umgekehrt.

Prinzipiell kann jede beliebige physikalische Eigenschaft, die mit Sensoren bestimmt werden kann, zur Bildung der Teilungsspur dienen. Beispielsweise können die ersten und die zweiten Bereiche unterschiedliche magnetische, optische oder auch mechanische Eigenschaften aufweisen.

Besonders zahlreiche Einsatzmöglichkeiten und besonders zuverlässig im Hinblick auf den Betrieb in industriellen Umgebungen sind Ausführungsvarianten der Erfindung, bei denen die ersten Bereiche elektrisch leitend und die zweiten Bereiche elektrisch isolierend sind und die Sensoren induktive Sensoren sind.

Zwei phasenversetzte abstandsunabhängige Signale können generiert werden, wenn die Abtasteinheit drei Sensoren aufweist, wobei die erste Untergruppe durch den ersten und den zweiten Sensor und die zweite Untergruppe durch den zweiten und den dritten Sensor gebildet ist. Hierbei kommt man sensorseitig mit einem Minimum an Komponenten aus.

Bei einer besonders bevorzugten Variante des erfindungsgemäßen Inkrementalweggebers weist die Abtasteinheit vier Sensoren auf und die erste Untergruppe ist durch den ersten und den zweiten Sensor und die zweite Untergruppe durch den zweiten und den dritten Sensor gebildet. Bei diesem Ausführungsbeispiel können zwei um 90° phasenversetzte Schaltsignale erhalten werden, und wenn außerdem die Teilungsspur ein 1:1-Teilungsverhältnis aufweist, kann auf bekannte Auswertealgorithmen zurückgegriffen werden. Hierzu werden die Sensoren in einem Abstand von 1/4 der Teilungsperiode angeordnet.

Grundsätzlich können aber auch periodische Strukturen mit einem größeren Tast- oder Teilungsverhältnis abgefragt werden. Beispielsweise kann die Abtasteinheit acht Sensoren aufweisen und die erste Untergruppe kann durch den ersten, den zweiten sowie den fünften und den sechsten Sensor gebildet sein und die zweite Untergruppe durch den zweiten, den dritten sowie den sechsten und den siebten Sensor gebildet sein.

Die numerische Bezeichnung der Sensoren soll hier so verstanden werden, dass beispielsweise bei in einer Reihe angeordneten Sensoren der Sensor ganz links als der erste der dann nach rechts sich anschließende als der zweite und beispielsweise der rechts außen liegende Sensor als der achte Sensor bezeichnet wird.

Allgemein gilt aufgrund der vorstehenden Erläuterungen, dass, je größer das Teilungsverhältnis der periodischen Struktur ist, desto mehr Sensoren benötigt werden.

Die Teilungsspur kann grundsätzlich aus einer beliebigen periodischen Struktur bestehen, die im Hinblick auf das Abtasten geeignete physikalische Eigenschaften aufweist. Beispielsweise kann an einer sich bewegenden oder zu überwachenden Vorrichtung ein bereits vorhandenes Lochgitter als Teilungsspur dienen.

Die Auswahl der Sensoren für die erste und die zweite Untergruppe, zur Bildung des ersten und zweiten Schaltsignals, kann, solange die Bedingung, dass die Untergruppen jeweils mindestens einen gemeinsamen Sensor beinhalten, grundsätzlich beliebig erfolgen.

Die Auswertung gestaltet sich jedoch einfacher, wenn die erste Untergruppe und die zweite Untergruppe dieselbe Anzahl von Sensoren beinhalten.

Um Schaltsignale mit einem Tastverhältnis von 1:1 zu erhalten, ist außerdem bevorzugt, wenn die erste und die zweite Untergruppe jeweils die Hälfte aller Sensoren beinhalten. Dies bedeutet außerdem, dass die Anzahl der Sensoren geradzahlig ist.

Weitere Vorteile und Merkmale der Erfindung werden nachstehend auf die beigefügten schematischen Figuren erläutert.

Hierin zeigt:
- Fig. 1: ein erstes Ausführungsbeispiel des erfindungsgemäßen Inkrementalweggebers mit drei Sensoren;
- Fig. 2: ein zweites Ausführungsbeispiel des erfindungsgemäßen Inkrementalweggebers mit vier Sensoren;
- Fig. 3: in tabellarischer Form dargestellte Messsignale und Schaltsignale aufgetragen gegen eine Verschiebung des ersten Objekts relativ zum zweiten Objekt für das Ausführungsbeispiel aus Fig. 2;
- Fig. 4: ein drittes Ausführungsbeispiel des erfindungsgemäßen Inkrementalweggebers mit vier Sensoren;
- Fig. 5: in tabellarischer Form dargestellte Messsignale und Schaltsignale aufgetragen gegen eine Verschiebung des ersten Objekts relativ zum zweiten Objekt für das Ausführungsbeispiel in Fig. 4;
- Fig. 6: ein viertes Ausführungsbeispiel des erfindungsgemäßen Inkrementalweggebers mit acht Sensoren; und
- Fig. 7: in tabellarischer Form dargestellte Messsignale und Schaltsignale gegen eine Verschiebung des ersten Objekts relativ zum zweiten Objekt für das Ausführungsbeispiel aus Fig. 6.

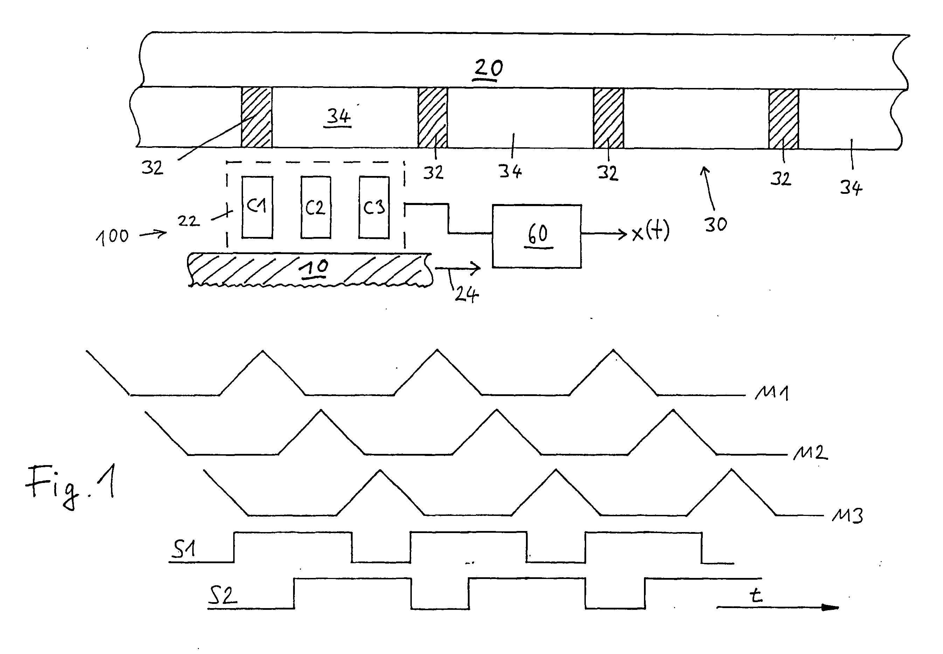

Ein erstes Ausführungsbeispiel des erfindungsgemäßen Inkrementalweggebers wird mit Bezug auf Fig. 1 erläutert.

Der dort dargestellte erfindungsgemäße Inkrementalweggeber 100 weist als wesentliche Komponenten eine an einem ersten Objekt 10 angeordnete Abtasteinheit 22 mit einer Mehrzahl von Sensoren C1, C2, C3 auf, die mit einer Auswerteeinheit 60 verbunden ist.

Die Sensoren C1, C2, C3 der Abtasteinheit 22 dienen zum Abtasten einer Teilungsspur 30, die an einem zweiten Objekt 20 angeordnet ist. Die Teilungsspur 30 besteht im Wesentlichen aus periodisch abwechselnd angeordneten ersten Bereichen 32 und zweiten Bereichen 34. Diese weisen jeweils unterschiedliche physikalische Eigenschaften auf, wodurch das Abtasten der Sensoren C1, C2, C3 möglich wird. Beispielsweise kann es sich bei den ersten Bereichen 32 um elektrisch leitende metallische Fahnen handeln und entsprechend können die zweiten Bereiche 34 Löcher oder Aussparungen in einem Blech sein. Die Sensoren C1, C2, C3 sind dann zweckmäßig induktive Sensoren, beispielsweise induktive Näherungsschalter.

Bei seitlicher Relativbewegung des ersten Objekts 10 bezüglich des zweiten Objekts 20 in der durch einen Pfeil 24 angeordneten Richtung erhält man die zeitlichen Verläufe der Messsignale M1, M2, M3 und der daraus in der Auswerteeinheit 60 abgeleiteten Schaltsignale S1, S2, die im unteren Bereich von Fig. 1 schematisch dargestellt sind.

Das Signal M1 gehört dabei zum Sensor C1, das Signal M2 zum Sensor C2 sowie das Signal M3 zum Sensor C3. Wie aus den Signalverläufen ersichtlich, wird das Messsignal jeweils maximal, wenn der entsprechende Sensor, unmittelbar vor einem leitenden ersten Bereich 32 steht, die Bedämpfung des Näherungsschalters, also maximal ist. Weiterhin ist aus den Verläufen ersichtlich, dass die Messsignale M1, M2, M3 aufgrund der Anordnung der Sensoren C1, C2, C3 verteilt über die Periode der Teilungsspur 30 einen Phasenversatz von 120° aufweisen.

Die im unteren Bereich von Fig. 1 dargestellten Schaltsignale S1 und S2 werden in der Auswerteeinheit 60 durch eine logische Auswertung erhalten, welche das Signal S1 auf HIGH schaltet, wenn das maximale Messsignal entweder vom Sensor C1 oder C2 geliefert wird und ansonsten auf LOW geschaltet wird. Weiterhin wird das Signal S2 auf HIGH geschaltet, wenn das maximale Signal von einem der Sensoren C2 oder C3 geliefert wird, ansonsten aber auf LOW geschaltet. Bei diesem Ausführungsbeispiel ist demgemäß der Sensor C2 Teil sowohl der ersten als auch der zweiten Untergruppe von Sensoren.

Aus jedem einzelnen der Schaltsignale S1 kann bei Relativbewegung in eine Richtung die Geschwindigkeit dieser Verschiebung und, wenn ein geeignetes Startsignal vorhanden ist, auch der Absolutbetrag der Verschiebung bestimmt werden. Bei beliebiger Richtung der Relativverschiebung kann eine Information über die Richtung, wie aus der relativen Phasenlage der Signale S1 und S2 ersichtlich, aus der zeitlichen Abfolge dieser Schaltsignale gewonnen werden. Insgesamt liefert die Auswerteeinheit 60 ein Verschiebungssignal x(t) zur weiteren Verwendung, beispielsweise bei einer Prozesssteuerung.

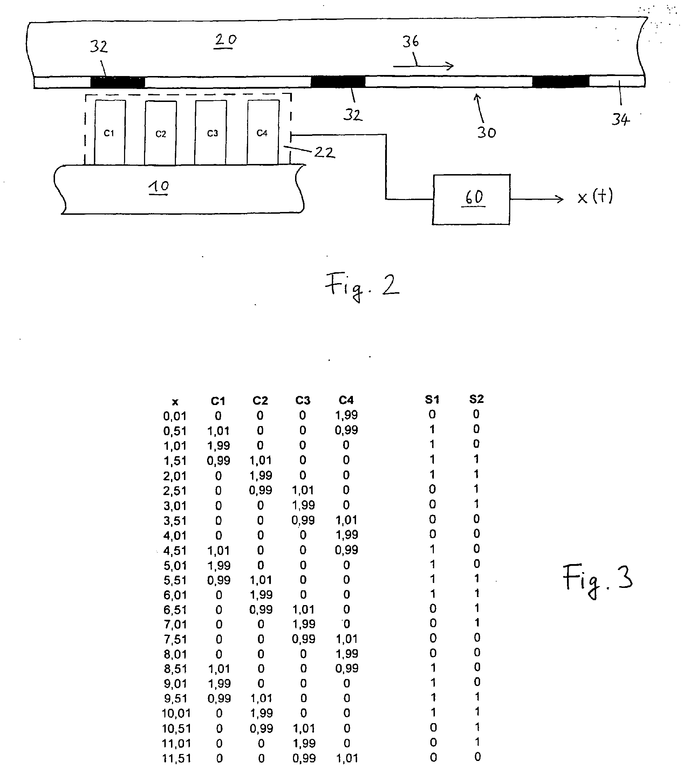

Ein zweites Ausführungsbeispiel eines erfindungsgemäßen Inkrementalweggebers ist in Fig. 2 dargestellt. Äquivalente Komponenten sind in allen Figuren mit denselben Bezugszeichen wie in Fig. 1 versehen. Im Unterschied zu Fig. sind bei der Variante in Fig. 2 insgesamt vier Sensoren C1, C2, C3 und C4 entlang einer Erstreckungsrichtung 36 der Teilungsspur 30 über eine Periode angeordnet. Die laterale Ausdehnung, das heißt die Ausdehnung in Erstreckungsrichtung 36, der ersten Bereiche 32 beträgt hier 1/4 der Periodenlänge p. Dementsprechend beträgt die laterale Ausdehnung der zweiten Bereiche 34 3/4 der Periodenlänge p. Die Sensoren C1, C2, C3 und C4 sind, wie aus Fig. 2 unmittelbar ersichtlich, in einem Abstand von 1/4 der Periodenlänge angeordnet.

Die Verläufe der Messsignale der Sensoren C1, C2, C3 und C4 und die daraus abgeleiteten Schaltsignale S1 und S2 sind tabellarisch in Fig. 3 gegen eine Verschiebung x des ersten Objekts 10 relativ zum zweiten Objekt 20 dargestellt. Diese Verläufe entsprechen den in Fig. 1 graphisch dargestellten Signalverläufen. Die logische Schaltbedingung besteht hierbei darin, dass das Schaltsignal S1 auf 1 geschaltet wird, wenn entweder der erste Sensor C1 oder der zweite Sensor C2 das maximale Signal liefert, ansonsten aber auf 0 gestellt wird. Andererseits wird das Schaltsignal S2 auf 1 gestellt, wenn das maximale Signal von einem der Sensoren C2 oder C3 geliefert wird und ist ansonsten 0. Die Werte für die Verschiebung x sind in der Tabelle in Fig. 3 gerade so gewählt, dass die Umschaltpunkte verdeutlicht werden. Die genannten Schaltbedingungen liefern zwei Schaltsignale S1 und S2 mit einem Phasenversatz von 90°. Die weitere Auswertung im Hinblick auf das Ortsignal x(t) gestaltet sich dann einfach und es kann auf bekannte Auswertungsalgorithmen zurückgegriffen werden.

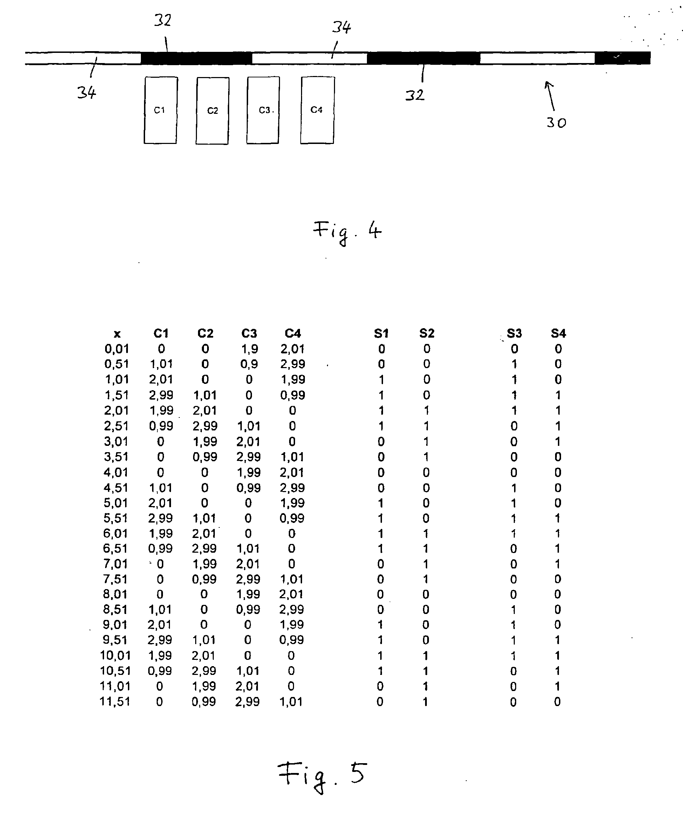

Ein drittes Ausführungsbeispiel des erfindungsgemäßen Inkrementalweggebers wird im Zusammenhang mit den Figuren 4 und 5 beschrieben. Fig. 4 zeigt schematisch die Anordnung von insgesamt vier Sensoren C1, C2, C3 und C4 entlang einer Teilungsspur 30. Dieses Ausführungsbeispiel entspricht im Wesentlichen der Variante aus Fig. 3. Der einzige Unterschied besteht darin, dass die laterale Ausdehnung der ersten Bereiche 32 und die laterale Ausdehnung der zweiten Bereiche 34 der Teilungsspur 30 jeweils die Hälfte der Periodenlänge p der Teilungsspur betragen.

Diese Ausbildung der Teilungsspur 30 ermöglicht im Vergleich zur erfindungsgemäßen Auswertung eine alternative Methode, die zur Ortsbestimmung nötigen Schaltsignale zu erzeugen. Dies wird mit Bezug auf Fig. 5 erläutert. Dort sind, wie in Fig. 3, die Messsignale der Sensoren C1, C2, C3 und C4 gegen die Verschiebung x des ersten Objekts 10 relativ zum zweiten Objekt 20 aufgetragen. Weiterhin finden sich die Schaltsignale S1, S2, die mit derselben logischen Bedingung wie in Fig. 3 gewonnen werden, das heißt S1=1 wenn das maximale Schaltsignal entweder von C1 oder C2 kommt, ansonsten S1=0. Weiterhin ist S2=1, wenn das maximale Schaltsignal von einem der Sensoren C2 oder C3 kommt, ansonsten S2=0.

Die Schaltsignale S3 und S4 werden durch eine alternative Methode gewonnen, für welche die Sensoren C1 und C3 zu einer ersten Sensoreinheit und die Sensoren C2 und C4 zu einer zweiten Sensoreinheit zusammengefasst werden.

Die Auswertung erfolgt nun so, dass das Schaltsignal S3 auf 1 gestellt wird, wenn der Sensor C1 im Vergleich zum Sensor C3 das größere Messsignal liefert. Dies ist, wie aus der Tabelle in Fig. 5 ersichtlich, beispielsweise bei den Verschiebungswerten x=0,51, 1,05, 1,51 und 2,01 der Fall. Ansonsten wird das Signal S3 auf 0 gestellt. Entsprechend wird das Signal S4 auf 1 geschaltet, wenn der Sensor C2 im Vergleich zum Sensor C4 das größere Messsignal liefert. Im Beispiel aus Fig. 5 ist dies insbesondere bei den Verschiebungspositionen x=1,51, 2,01, 2,51 und 3,01 der Fall. Ansonsten wird das Schaltsignal S4 auf 0 gestellt, wenn also das Messsignal des Sensors C4 größer ist als dasjenige des Sensors C2.

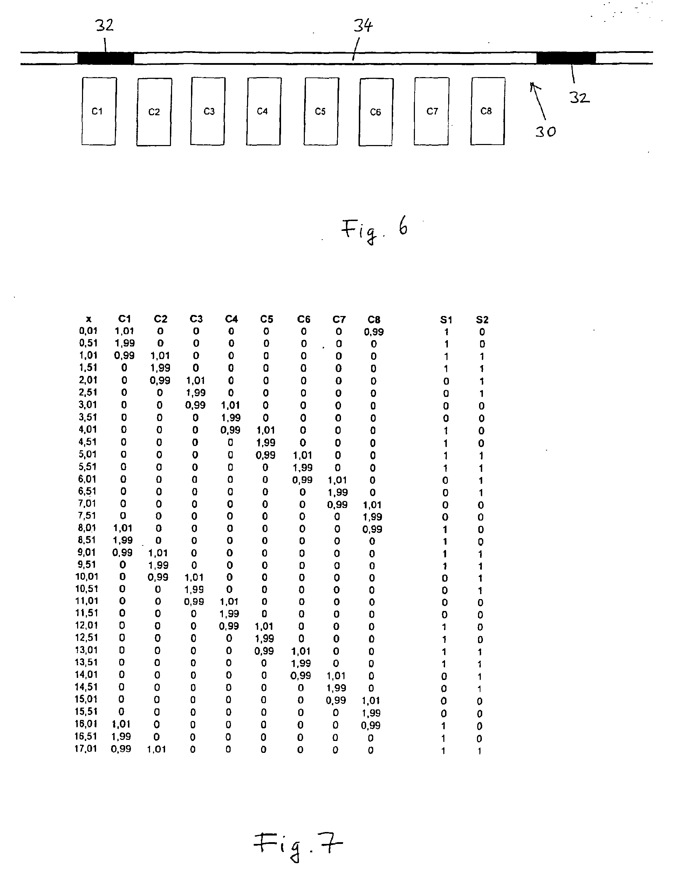

Ein viertes Ausführungsbeispiel eines erfindungsgemäßen Inkrementalweggebers wird in Zusammenhang mit den Figuren 6 und 7 erläutert. Wie aus der schematischen Ansicht in Fig. 6 ersichtlich, sind dort über eine Periode p einer Teilungsspur insgesamt acht Sensoren C1,...,C8 in einem Abstand von jeweils 1/8 der Periodenlänge p angeordnet. Die Teilungsspur ist, wie in den vorhergehenden Beispielen an einem zweiten Objekt, welches hier aus Gründen der Übersichtlichkeit nicht gesondert dargestellt ist, angeordnet. Weiterhin sind die Sensoren, ebenfalls wie in den vorhergehenden Ausführungsvarianten Teil einer Abtasteinheit, die an einem ersten Objekt, das hier ebenfalls nicht dargestellt ist, angeordnet.

Für eine solche Anordnung von Sensoren erhaltene Verläufe der Messsignale sind in der Tabelle in Fig. 7 dargestellt. Wiederum sind dort für die Verschiebung x des ersten Objekts relativ zum zweiten Objekt bestimmte Punkte ausgewählt, an denen das Schaltverhalten besonders einfach deutlich gemacht werden kann. Das Schaltsignal S1 wird auf 1 geschaltet, wenn einer der Sensoren C1, C2, C5 oder C6 das maximale Messsignal liefert. Ansonsten ist S1=0.

Andererseits wird das Schaltsignal S2 auf 1 geschaltet, wenn das maximale Messsignal von einem der Sensoren C2, C3, C6 oder C7 geliefert wird. Entsprechend ist S2 ansonsten 0.

Mit dem Ausführungsbeispiel der Figuren 6 und 7 wird besonders deutlich, dass, im Unterschied zu bisherigen Inkrementalweggebern die Teilungsspur 30 grundsätzlich ein beliebiges Teilungsverhältnis aufweisen kann und dass unabhängig hiervon Schaltsignale mit einem Phasenversatz von 90° und jeweils einem Tastverhältnis von 1:1 erzeugt werden können. Dies ermöglicht besonders vielfältige Anwendungen im industriellen Bereich.

Mit der vorliegenden Erfindung wird ein neuartiger Inkrementalweggeber bereitgestellt, bei dem eine Signalbildung durch einen Vergleich von Sensorwerten, beispielsweise von vier Einzelsensoren erfolgt, die in einem Abstand von 1/4 der Periode einer Codeschiene oder Teilungsspur angeordnet sind.

Im wesentlichen Unterschied zu bisherigen Verfahren muss das Steg-Loch-Raster der Codeschiene nicht in einem 1:1-Verhältnis angeordnet werden, sondern kann auch andere Werte, insbesondere 1:4 oder 1:8 aufweisen. Ausgewertet wird bei der hier beschriebenen Erfindung, welche Sensoren das maximale Signal liefern.

Aufgrund der Auswertung der Maxima ist die hier beschriebene Auswertung weitestgehend abstandsunabhängig, da nicht von den absoluten Messwerten der Einzelsensoren abhängig.

Grundsätzlich kann dieses Verfahren für eine beliebige Anzahl von Sensoren pro Periode angewendet werden. Durch eine höhere Anzahl von Sensoren pro Periode kann im Grundsatz außerdem die Genauigkeit der Verschiebungsbestimmung erhöht werden. Beispielsweise können mit acht Sensoren, wie im Beispiel aus den Figuren 6 und 7 dargestellt, zwei Impulse pro Periode der Teilungsspur 30 erzeugt werden.

## Patentansprüche

1. Inkrementalweggeber zum Bestimmen einer Verschiebung eines ersten Objekts (10) relativ zu einem zweiten Objekt (20), insbesondere zur Durchführung des Verfahrens nach Anspruch 10,
mit einer mit dem ersten Objekt (10) verbundenen oder zu verbindenden Abtasteinheit (22) zum Abtasten einer mit dem zweiten Objekt (20) verbundenen oder zu verbindenden Teilungsspur (30) mit ersten Bereichen (32) und zweiten Bereichen (34), die mit einer Periodenlänge (p) abwechselnd angeordnet sind,
wobei die ersten Bereiche (32) eine erste physikalische Eigenschaft und die zweiten Bereiche (34) eine davon unterschiedliche zweite physikalische Eigenschaft aufweisen, und
wobei die Abtasteinheit (22) eine Mehrzahl von Sensoren (C1,..,C8) zum Abtasten der ersten Bereiche (32) und der zweiten Bereiche (34) aufgrund der ersten und/oder der zweiten physikalischen Eigenschaft aufweist, und
mit einer mit der Abtasteinheit (22) verbundenen Auswerteeinheit (60) zum Bestimmen der Verschiebung (x) auf Grundlage von Messsignalen der Sensoren (C1,..,C8),
**dadurch gekennzeichnet,**
**dass** die Abtasteinheit (22) mindestens drei Sensoren (C1,..,C8) aufweist, die über mindestens eine Periodenlänge (p) verteilt voneinander beabstandet angeordnet sind,
**dass** in der Auswerteeinheit (60) zum Bestimmen der Verschiebung (x) ein erstes Schaltsignal (S1) und ein zweites Schaltsignal (S2) aus den Messsignalen der Sensoren (C1,..,C8) generierbar ist,
**dass** das erste Schaltsignal (S1) einen ersten Wert, insbesondere HIGH, annimmt, wenn derjenige Sensor (C1,..,C8), welcher ein maximales Messsignal ausgibt, zu einer ersten Untergruppe von Sensoren (C1,..,C8) gehört, und ansonsten einen zweiten Wert, insbesondere LOW, annimmt,
**dass** zweite Schaltsignal (S1) einen ersten Wert, insbesondere HIGH annimmt, wenn derjenige Sensor (C1,..,C8), welcher ein maximales Messsignal ausgibt, zu einer zweiten Untergruppe von Sensoren (C1,..,C8) gehört, und ansonsten einen zweiten Wert, insbesondere LOW, annimmt,
und
wobei mindestens ein Sensor (C1,..,C8) sowohl zur ersten Untergruppe als auch zur zweiten Untergruppe gehört.

2. Inkrementalweggeber nach Anspruch 1,
**dadurch gekennzeichnet,**
**dass** die Sensoren (C1,..,C8) gleichmäßig voneinander beabstandet angeordnet sind.

3. Inkrementalweggeber nach einem der Ansprüche 1 oder 2,
**dadurch gekennzeichnet,**
**dass** die ersten Bereiche (32) elektrisch leitend und die zweiten Bereiche (34) elektrisch isolierend sind und
**dass** die Sensoren (C1,..,C8) induktive Sensoren (C1,..,C8) sind.

4. Inkrementalweggeber nach einem der Ansprüche 1 bis 3,
**dadurch gekennzeichnet,**
**dass** die Abtasteinheit (22) drei Sensoren (C1, C2, C3) aufweist,
**dass** die erste Untergruppe durch den ersten und den zweiten Sensor (C1) gebildet ist und
**dass** die zweite Untergruppe durch den zweiten und den dritten Sensor (C2, C3) gebildet ist.

5. Inkrementalweggeber nach einem der Ansprüche 1 bis 3,
**dadurch gekennzeichnet,**
**dass** die Abtasteinheit (22) vier Sensoren (C1,..,C4) aufweist, und
**dass** die erste Untergruppe durch den ersten und den zweiten Sensor (C1, C2) gebildet ist und
**dass** die zweite Untergruppe durch den zweiten und den dritten Sensor (C3, C4) gebildet ist.

6. Inkrementalweggeber nach einem der Ansprüche 1 bis 3,
**dadurch gekennzeichnet,**
**dass** die Abtasteinheit (22) acht Sensoren (C1,..,C8) aufweist und dass die erste Untergruppe (C1, C2, C5, C6) durch den ersten, den zweiten sowie den fünften und den sechsten Sensor gebildet ist und
**dass** die zweite Untergruppe (C2, C3, C6, C7) durch den zweiten, den dritten sowie den sechsten und den siebten Sensor gebildet ist.

7. Inkrementalweggeber nach einem der Ansprüche 1 bis 6,
**dadurch gekennzeichnet,**
**dass** die Teilungsspur (30) durch ein Lochgitter gebildet ist.

8. Inkrementalweggeber nach einem der Ansprüche 1 bis 7,
**dadurch gekennzeichnet,**
**dass** die erste Untergruppe und die zweite Untergruppe dieselbe Anzahl von Sensoren (C1,..,C8) beinhalten.

9. Inkrementalweggeber nach einem der Ansprüche 1 bis 8,
**dadurch gekennzeichnet,**
**dass** die erste Untergruppe und die zweite Untergruppe jeweils die Hälfte aller Sensoren (C1,..,C8) beinhalten.

10. Verfahren zum Bestimmen einer Verschiebung eines ersten Objekts relativ zu einem zweiten Objekt,
insbesondere unter Verwendung eines Inkrementalweggebers nach einem Ansprüche 1 bis 9,
bei dem eine mit dem ersten Objekt (10) verbundene Teilungsspur (30) mit einer Mehrzahl von Sensoren (C1,..,C8), die mit dem zweiten Objekt (20) verbunden sind, abgetastet wird,
wobei die Teilungsspur (30) erste Bereiche (32) mit einer ersten physikalischen Eigenschaft und zweite Bereiche (34) mit einer zweiten physikalischen Eigenschaft aufweist, die mit einer Periodenlänge (p) abwechselnd angeordnet sind, und
bei dem die Verschiebung des ersten Objekts relativ zu dem zweiten Objekt aus Messsignalen der Sensoren (C1,..,C8), die aufgrund der ersten und/oder der zweiten physikalischen Eigenschaft gewonnen werden, bestimmt wird,
**dadurch gekennzeichnet,**
**dass** mindestens drei Sensoren (C1,..,C8) entlang der Teilungsspur (30) über mindestens eine Periodenlänge (p) verteilt voneinander beabstandet angeordnet werden,
**dass** die Verschiebung auf Grundlage eines ersten Schaltsignals und eines zweiten Schaltsignals bestimmt wird,
**dass** das erste Schaltsignal (S1) einen ersten Wert, insbesondere HIGH, annimmt, wenn derjenige Sensor (C1,..,C8), welcher ein maximales Messsignal ausgibt, zu einer ersten Untergruppe von Sensoren (C1,..,C8) gehört, und ansonsten einen zweiten Wert, insbesondere LOW, annimmt,
**dass** zweite Schaltsignal (S1) einen ersten Wert, insbesondere HIGH, annimmt, wenn derjenige Sensor (C1,..,C8), welcher ein maximales Messsignal ausgibt, zu einer zweiten Untergruppe von Sensoren (C1,..,C8) gehört, und ansonsten einen zweiten Wert, insbesondere LOW, annimmt,
und
wobei mindestens ein Sensor (C1,..,C8) sowohl zur ersten Untergruppe als auch zur zweiten Untergruppe gehört.

## Claims

1. Incremental displacement transducer for determining a displacement of a first object (10) relative to a second object (20), particularly for performing the method according to claim 10,
with a scanning unit (22) linked or to be linked with the first object (10) for scanning a division track (30) linked or to be linked with the second object (20) with first areas (32) and second areas (34) arranged in alternating manner with a period length (p),
in which the first areas (32) have a first physical property and the second areas (34) a second physical property differing therefrom and
where the scanning unit (22) has a plurality of sensors (C1, ...C8) for scanning the first areas (32) and second areas (34) on the basis of the first and/or second physical property and
with an evaluating unit (60) linked with the scanning unit (22) for determining the displacement (x) on the basis of the measuring signals of the sensors (C1, ...C8),
**characterized in that**
the scanning unit (22) has at least three sensors (C1, ...C8) arranged in spaced manner from one another over at least one period length (p),
a first switching signal (S1) and a second switching signal (S2) can be generated from the measuring signals of the sensors (C1, ...C8) in evaluating unit (60) for determining the displacement (x),
the first switching signal (S1) assumes a first value, particularly HIGH if the particular sensor (C1, ...C8) which emits a maximum measuring signal belongs to a first subgroup of sensors (C1, ...C8) and otherwise assumes a second value, particularly LOW,
the second switching signal (S2) assumes a first value, particularly HIGH if the particular sensor (C1, ...C8) which emits a maximum measuring signal belongs to a second subgroup of sensors (C1, ... C8) and otherwise assumes a second value, particularly LOW and
where at least one sensor (C1, ...C8) belongs to both the first subgroup and the second subgroup.

2. Incremental displacement transducer according to claim 1,
**characterized in that**
the sensors (C1, ... C8) are arranged in uniformly spaced manner.

3. Incremental displacement transducer according to one of the claims 1 or 2,
**characterized in that**
the first areas (32) are electrically conductive and the second areas (34) electrically insulating and
that the sensors (C1, ... C8) are inductive sensors (C1, ... C8).

4. Incremental displacement transducer according to one of the claims 1 to 3,
**characterized in that**
the scanning unit (22) has three sensors (C1, C2, C3),
that the first subgroup is formed by the first and second sensor (C1, C2) and that the second subgroup is formed by the second and third sensors (C2, C3).

5. Incremental displacement transducer according to one of the claims 1 to 3,
**characterized in that**
the scanning unit (22) has four sensors (C1, ...C4) and
that the first subgroup is formed by the first and second sensors (C1, C2) and that the second subgroup is formed by the second and third sensors (C3, C4).

6. Incremental displacement transducer according to one of the claims 1 to 3,
**characterized in that**
the scanning unit (22) has eight sensors (C1, ... C8) and
that the first subgroup (C1, C2, C5, C6) is formed by the first, second, fifth and sixth sensors and
that the second subgroup (C2, C3, C6, C7) is formed by the second, third, sixth and seventh sensors.

7. Incremental displacement transducer according to one of the claims 1 to 6,
**characterized in that**
the division track (30) is formed by a hole grid.

8. Incremental displacement transducer according to one of the claims 1 to 7,
**characterized in that**
the first subgroup and second subgroup include the same number of sensors (C1, ... C8).

9. Incremental displacement transducer according to one of the claims 1 to 8,
**characterized in that**
the first subgroup and the second subgroup in each case include half of all the sensors (C1, ... C8).

10. Method for determining a displacement of a first object relative to a second object, particularly using an incremental displacement transducer according to one of the claims 1 to 9,
in which a division track (30) linked with the first object (10) is scanned with a plurality of sensors (C1, ... C8) linked with the second object (20),
where the division track (30) has first areas (32) with a first physical property and second areas (34) with a second physical property arranged in alternating manner with a period length (p) and
where the displacement of the first object relative to the second object is determined from measuring signals of sensors (C1, ... C8) obtained on the basis of the first and/or second physical property,
**characterized in that**
at least three sensors (C 1, ...C8) are arranged in mutually spaced manner along division track (30) over at least one period length (p),
the displacement is determined on the basis of a first switching signal and a second switching signal,
the first switching signal (S1) assumes a first value, particularly HIGH if the particular sensor (C1, ... C8) emitting a maximum measuring signal belongs to a first subgroup of sensors (C1, ... C8) and otherwise assumes a second value, particularly LOW,
the second switching signal (S2) assumes a first value, particularly HIGH if the particular sensor (C1, ... C8) which emits a maximum measuring signal belongs to a second subgroup of sensors (C1, ... C8) and otherwise assumes a second value, particularly LOW and
where at least one sensor (C1, ... C8) belongs both to the first subgroup and to the second subgroup.

## Revendications

1. Encodeur de déplacement incrémentiel pour déterminer un déplacement d'un premier objet (10) par rapport à un deuxième objet (20), en particulier pour appliquer le procédé selon la revendication 10,
avec une unité de balayage (22) reliée ou à relier au premier objet (10) pour balayer une piste graduée (30) reliée ou à relier au deuxième objet (20) avec des premières régions (32) et des deuxièmes régions (34), qui sont disposées en alternance avec une longueur de période (p),
dans lequel les premières régions (32) présentent une première propriété physique et les deuxièmes régions (34) une deuxième propriété physique différente de celle-ci, et
dans lequel l'unité de balayage (22) comprend une pluralité de capteurs (C1, ..., C8) pour balayer les premières régions (32) et les deuxièmes régions (34) sur la base de la première et/ou de la deuxième propriété physique, et
avec une unité d'analyse (60) reliée à l'unité de balayage (22) pour déterminer le déplacement (x) sur la base de signaux de mesure des capteurs (C1, ..., C8), **caractérisé en ce que**
l'unité de balayage (22) comprend au moins trois capteurs (C1, ..., C8), qui sont répartis à distance les uns des autres sur au moins une longueur de période (p), pour déterminer le déplacement (x), un premier signal de commutation (S1) et un deuxième signal de commutation (S2) peuvent être générés dans l'unité d'analyse (60) à partir des signaux de mesure des capteurs (C1, ..., C8),
le premier signal de commutation (S1) prend une première valeur, en particulier HIGH, lorsque le capteur (C1, ..., C8) qui délivre un signal de mesure maximal appartient à un premier sous-groupe de capteurs (C1, ..., C8), et sinon une deuxième valeur, en particulier LOW,
le deuxième signal de commutation (S2) prend une première valeur, en particulier HIGH, lorsque le capteur (C1, ..., C8) qui délivre un signal de mesure maximal appartient à un deuxième sous-groupe de capteurs (C1, ..., C8), et sinon une deuxième valeur, en particulier LOW, et
dans lequel au moins un capteur (C1, ..., C8) appartient à la fois au premier sous-groupe et au deuxième sous-groupe.

2. Encodeur de déplacement incrémentiel selon la revendication 1,
**caractérisé en ce que**
les capteurs (C1, ..., C8) sont placés à distance régulière les uns des autres.

3. Encodeur de déplacement incrémentiel selon la revendication 1 ou 2,
**caractérisé en ce que**
les premières régions (32) sont conductrices électriques et les deuxièmes régions (34) sont isolantes électriques, et
les capteurs (C1, ..., C8) sont des capteurs inductifs (C1, ... C8).

4. Encodeur de déplacement incrémentiel selon l'une quelconque des revendications 1 à 3,
**caractérisé en ce que**
l'unité de balayage (22) comprend trois capteurs (C1, C2, C3),
le premier sous-groupe est formé du premier et du deuxième capteurs (C1, C2), et
le deuxième sous-groupe est formé du deuxième et du troisième capteurs (C2, C3).

5. Encodeur de déplacement incrémentiel selon l'une quelconque des revendications 1 à 3,
**caractérisé en ce que**
l'unité de balayage (22) comprend quatre capteurs (C1, ..., C4), et
le premier sous-groupe est formé du premier et du deuxième capteurs (C1, C2), et
le deuxième sous-groupe est formé du deuxième et du troisième capteurs (C3, C4).

6. Encodeur de déplacement incrémentiel selon l'une quelconque des revendications 1 à 3,
**caractérisé en ce que**
l'unité de balayage (22) comprend huit capteurs (C1, ..., C8), et
le premier sous-groupe (C1, C2, C5, C6) est formé du premier, du deuxième, ainsi que du cinquième et du sixième capteurs, et
le deuxième sous-groupe (C2, C3, C6, C7) est formé du deuxième, du troisième, ainsi que du sixième et du septième capteurs.

7. Encodeur de déplacement incrémentiel selon l'une quelconque des revendications 1 à 6,
**caractérisé en ce que**
la piste graduée (30) est formée par une grille perforée.

8. Encodeur de déplacement incrémentiel selon l'une quelconque des revendications 1 à 7,
**caractérisé en ce que**
le premier sous-groupe et le deuxième sous-groupe contiennent le même nombre de capteurs (C1, ..., C8).

9. Encodeur de déplacement incrémentiel selon l'une quelconque des revendications 1 à 8,
**caractérisé en ce que**
le premier sous-groupe et le deuxième sous-groupe contiennent chacun la moitié de tous les capteurs (C1, ... , C8).

10. Procédé de détermination d'un déplacement d'un premier objet par rapport à un deuxième objet,
en particulier en utilisant un encodeur de déplacement incrémentiel selon l'une quelconque des revendications 1 à 9,
dans lequel une piste graduée (30) reliée au premier objet (10) est balayée avec une pluralité de capteurs (C1, ..., C8) qui sont reliés au deuxième objet (20), dans lequel la piste graduée (30) comprend des premières régions (32) ayant une première propriété physique et des deuxièmes régions (34) ayant une deuxième propriété physique, qui sont disposées en alternance avec une longueur de période (p), et
dans lequel le déplacement du premier objet par rapport au deuxième objet est déterminé à partir de signaux de mesure des capteurs (C1, ..., C8) qui sont recueillis sur la base de la première ou de la deuxième propriété physique,
**caractérisé en ce que**
au moins trois capteurs (C1, ..., C8) sont répartis à distance les uns des autres sur au moins une longueur de période (p) le long de la piste graduée (30),
le déplacement est déterminé sur la base d'un premier signal de commutation et d'un deuxième signal de commutation,
le premier signal de commutation (S1) prend une première valeur, en particulier HIGH, lorsque le capteur (C1, ..., C8) qui délivre un signal de mesure maximal appartient à un premier sous-groupe de capteurs (C1, ..., C8), et sinon une deuxième valeur, en particulier LOW,
le deuxième signal de commutation (S2) prend une première valeur, en particulier HIGH, lorsque le capteur (C1, ..., C8) qui délivre un signal de mesure maximal appartient à un deuxième sous-groupe de capteurs (C1, ..., C8), et sinon une deuxième valeur, en particulier LOW,
et dans lequel au moins un capteur (C1, ..., C8) appartient à la fois au premier sous-groupe et au deuxième sous-groupe.
